# EUROPEAN PATENT SPECIFICATION

(11) **EP 0 900 965 B1**
(45) Date of publication and mention of the grant of the patent: **17.11.2004**
(21) Application number: 98116546.7
(22) Date of filing: 02.09.1998
(51) Int. Cl.: F16L 11/20, D06F 39/08, A47L 15/42, F16L 25/00

(54) **Water feeding tube for household electric appliances**
Speisewasserleitung für Elektro-Haushaltsgeräte
Tuyau d'alimentation d'eau pour appareils éléctroménagers

(30) Priority: 03.09.1997 IT MI970633 U
(43) Date of publication of application: 10.03.1999
(73) Proprietor: RE-FLEX S.r.l., 21049 Tradate (VA) (IT)
(72) Inventor: Restelli, Andrea c/o Re-Flex, 21049 Tradate (VA) (IT)
(74) Representative: Cicogna, Franco

(56) References cited:
- EP-A- 0 609 842
- EP-A- 0 859 078
- DE-A- 2 854 016
- GB-A- 2 161 501

## Description

### BACKGROUND OF THE INVENTION

The present invention relates to an improved tube for supplying hot water, which can be applied, in particular, to household electric appliances, such as linge washing machines, dish washing machines and the like.

As is known, one of the most serious problem affecting linge washing machines and dish washing machines is the so-called flooding problem.

In particular, such a flooding drawback occurs as the tube supplying the mains water breaks or leaks, for example because of a worn outer surface thereof.

In this case, the supplied water exit the tube, thereby causing the above mentioned flooding problem, which is usually overcome by the washing machine user only when the user detects an operation failure, frequently after substantial damages due to the mentioned flooding event. Prior art solutions for preventing such flooding are described in DE-A-2854016 and EP-609842.

### SUMMARY OF THE INVENTION

Accordingly, the aim of the present invention is to provide such a protective system allowing to prevent the above flooding problem from occurring.

Within the scope of the above mentioned aim, a main object of the present invention is to provide such a tube for feeding or supplying water to household electric appliances which is specifically designed for detecting and signalling an incipient flooding condition.

Another object of the present invention is to provide such a protective system preventing water from exiting from the water feeding tube, up to a tube recovering work.

According to one aspect of the present invention, the above mentioned aim and objects, as well as yet other objects, which will become more apparent hereinafter, are achieved by a water feeding tube for household electric appliances such as linge washing machines, dish washing machines and the like, according to claim 1.

In particular, the material forming said water feeding tube is a PVC or rubber material, or any other suitable thermoplastic material.

The protective sheath forming material is polypropylene or any other suitable clear or transparent material.

The present invention provides a lot of advantages with respect to the prior art. At first, the subject system does not comprise any device, either of electric, pneumatic or mechanic type, for shutting-off the mains water flow, in the case of leakages of the water feeding tube. Thus, it will be very inexpensive and of simple use.

Moreover, the system according to the present invention is very reliable and efficient, since a possible water leakage of the water feeding tube will be held in the gap between said tube and outer protective sheath which, owing to the tightly sealed relationship, will allow the system to properly control the inlet water, thereby preventing any dangerous floodings from occurring.

Moreover, the mentioned failure will be clearly signalled by the color of the water in said gap, owing to the clearness or transparency of the protective sheath and the specifically designed outer material of the tube, allowing its color to be clearly seen as contacted by water.

This would be very important since one of the main features of the tube according to the present invention is that the user, after having detected a leakage of the inner tube, can quickly stop the operation of the machine, or continue with other washing operations up to a repairing work, and this differently from prior systems.

### BRIEF DESCRIPTION OF THE DRAWINGS

Further advantages and features of the present invention will become more apparent from the following disclosure, given by way of an illustrative but not limitative example with reference to the accompanying drawings, where:
Figure 1 is a side view of a water feeding tube for household electric appliances according to the present invention;
Figure 2 is a side view of a fitting for the tube of Figure 1;
   and

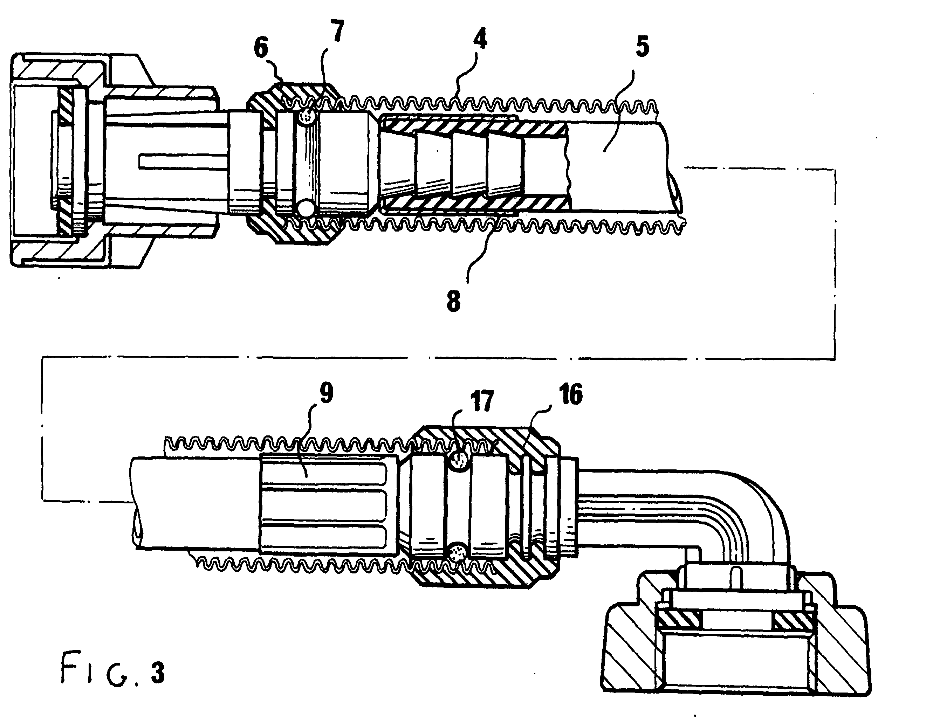

Figure 3 is a side, partially cross-sectioned view, on an enlarged scale, of the tube shown in Figures 1 and 2.

### DESCRIPTION OF THE PREFERRED EMBODIMENT

In the following disclosure reference will be made to a preferred embodiment of the present invention, as illustrated by way of an exemplary but not limitative example of several possible variations of the invention.

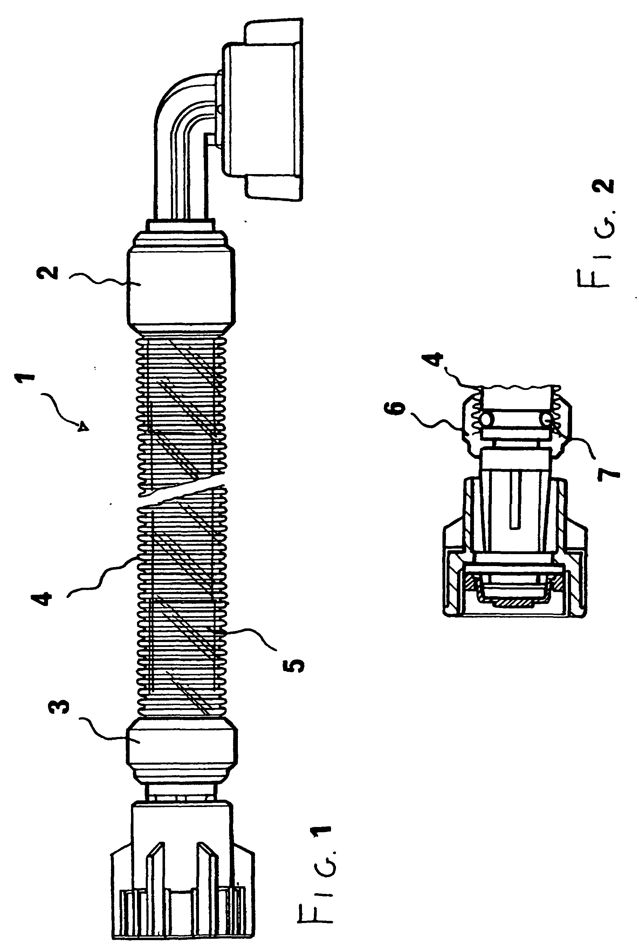

Figure 1 is a side view illustrating the water feeding tube, generally indicated by the reference number 1 according to the present invention. More specifically, the tube 1 comprises a water feeding reinforced tube 5, which is coated by a protective sheath 4.

The protective sheath 4 is made of a clear or transparent material, and is so designed as to present a corrugated surface.

The reinforced tube 5, in turn, is locked on the tube fittings 2 and 3, by tube clamping metal sheaths 8 and 9. The protective sheath 4, which protectively coats the reinforced tube 5, defines a tightly sealed gap arranged between the outer surface of the tube 5 and the inner surface of said protective sheath 4.

Said protective sheath, moreover, is tightly connected to the fittings 2 and 3. More specifically, each fitting 2 and 3 is provided with a respective O-ring 7 and 17, each respectively arranged in a suitable recess as formed on each said fitting 2 and 3. Each O-ring is arranged between said fittings and protective sheath 4. Moreover, the end portions of the protective sheath 4 are coupled to said fittings 2 and 3 by over-injectings 6 and 16 of plastic material, thereby providing the intended tight connection.

The reinforced tube 5 is made of a dark colored material, which, as it will become more apparent hereinafter, will provide a great contrast as contacted by water.

The operation of the water feeding tube according to the invention is as follows.

As in the tube 5 a water leakage occurs, the water held in said tube will not exit the tube, thereby preventing any floodings from occurring, but is controlled or anyhow held inside the gap formed between the outer surface of the tube 5 and the corrugated protective sheath 4.

Thus, as stated, the water will be held inside said gap, owing to the tightly sealed coupling provided at the fittings 2 and 3.

Moreover, the water in said gap will provide an optic bubble effect allowing the user to easily detect the water leakage, thereby performing repairing works before any flooding occurrence.

In fact, the tube 5, as stated, is made of a material providing its outer surface with a dark color which will be immediately seen at those regions where said surface is covered by water.

Since the outer sheath 4 is made of a clear or transparent material, the user can easily see, through said protective sheath, the changing of the color inside the tube, thereby detecting the failure of the main tube 5, before any flooding occurrence.

In particular, the user, in detecting that failure, can immediately stop the machine or continue with other washing operations up to a repairing or replacing work.

As stated, the material forming said protective sheath would be preferably a polypropylene or any other suitable clear or transparent material.

## Claims

1. A water feeding tube (1, 5) for household electric appliances, such as linge washing machines, dish washing machines and the like, said tube (1, 5) being coated by a protective sheath (4) made of a transparent material having a corrugated surface and including means for forming a tightly sealed gap between an outer surface of said tube (1, 5) and an inner surface of said protective sheath (4) and being delimited by two tightly sealed fittings (2, 3), **characterized in that** said tube is made of a dark color material adapted to provide a great contrast as seen through a water bubble or film, that said means for forming said tightly sealed gap comprise, at each said fitting (2, 3) of said water delivery tube (1, 5), an O-ring (7, 17), arranged in a recess formed on each said fitting (2, 3) and between each said fitting and the related protective sheath, the end portions of said protective sheath being coupled to said fittings (2, 3) by over-injecting (6, 16) a plastic material, and that, near said fittings (2, 3), each end of said tube is coupled to said fittings (2, 3) by a respective tube clamping metal sheath (8, 9).

2. A water feeding tube according to Claim 1, **characterized in that** said dark color material forming said water feeding tube is a PVC, or rubber material, or any other thermoplastic material.

3. A water feeding tube according to Claim 1, **characterized in that** said material forming said protective sheath is a polypropylene or other transparent material.

## Patentansprüche

1. Speisewasserleitung (1, 5) für Elektro-Haushaltsgeräte wie beispielsweise Waschmaschinen, Geschirrspülmaschinen und dergleichen, wobei die Leitung (1, 5) von einer Schutzhülle (4) umgeben ist, welche aus einem transparenten Material besteht und eine wellige Oberfläche aufweist und ein Mittel zum Herstellen eines fest abgedichteten Spaltes zwischen einer Außenfläche der Leitung (1, 5) und einer Innenfläche der Schutzhülle (4) enthält und durch zwei fest abgedichtete Anschlussstücke (2, 3) begrenzt ist, **dadurch gekennzeichnet, dass** die Leitung aus einem dunkelfarbigen Material besteht, das einen deutlichen Kontrast erzeugt, wenn es durch eine Wasserblase oder einen Wasserfilm betrachtet wird; dass das Mittel zum Herstellen des fest abgedichteten Spaltes an jedem Anschlussstück (2, 3) der Speisewasserleitung (1, 5) einen Runddichtring (7, 17) umfasst, der in einer Nut, die in jedem der Anschlussstücke (2, 3) ausgebildet ist, und zwischen jedem Anschlussstück und der zugehörigen Schutzhülle angeordnet ist, wobei die Endabschnitte der Schutzhülle durch Überlagern (6, 16) mit einem Kunststoffmaterial mit den Anschlussstücken (2, 3) verbunden sind; und dass jedes Ende der Leitung nahe den Anschlussstücken (2, 3) jeweils mittels einer metallischen Schlauchklemmhülse (8, 9) mit den Anschlussstücken (2, 3) verbunden ist.

2. Speisewasserleitung nach Anspruch 1, **dadurch gekennzeichnet, dass** das dunkelfarbige Material, aus dem die Speisewasserleitung besteht, ein PVC- oder Gummimaterial oder ein sonstiges thermoplastisches Material ist.

3. Speisewasserleitung nach Anspruch 1, **dadurch gekennzeichnet, dass** das Material, aus dem die Schutzhülle besteht, ein Polypropylen- oder sonstiges transparentes Material ist.

## Revendications

1. Tube d'alimentation en eau (1, 5) pour appareils électroménagers, telles que les machines à laver le linge, les lave-vaisselles et semblables, ledit tube (1, 5) étant recouvert par une enveloppe protectrice (4) fabriquée en un matériau transparent présentant une surface striée et comprenant des moyens pour former un espace complètement étanche entre une surface externe dudit tube (1, 5) et une surface interne de ladite enveloppe protectrice (4) et étant délimité par deux raccords complètement étanches (2, 3), **caractérisé en ce que** ledit tube est fabriqué en un matériau de couleur sombre adapté pour fournir un grand contraste comme observé à travers un film ou une bulle d'eau, **en ce que** lesdits moyens pour former ledit espace complètement étanche comprennent, au niveau de chaque raccord (2, 3) dudit tube d'alimentation en eau (1, 5), un joint d'étanchéité (7, 17), disposé dans un creux formé sur chaque raccord (2, 3) et entre chacun desdits raccords et l'enveloppe protectrice apparentée, les parties d'extrémité de ladite enveloppe protectrice étant couplées audits raccords (2, 3) en sur-injectant (6, 16) un matériau plastique, et **en ce que**, près desdits raccords (2, 3), chacune desdites extrémités est couplée audits raccords (2, 3) par une enveloppe métallique respective (8, 9) de blocage de tube.

2. Tube d'alimentation en eau selon la revendication 1, **caractérisé en ce que** ledit matériau de couleur sombre formant ledit tube d'alimentation en eau est un matériau PVC, ou en caoutchouc, ou un tout autre type de matériau thermoplastique.

3. Tube d'alimentation en eau selon la revendication 1, **caractérisé en ce que** ledit matériau formant ladite enveloppe protectrice est un matériau en polypropylène ou un tout autre matériau transparent.
